**Europäisches Patentamt**

**European Patent Office**

**Office européen des brevets**

(11) Veröffentlichungsnummer: **0 113 024**
**A1**

## (12) EUROPÄISCHE PATENTANMELDUNG

(21) Anmeldenummer: **83111714.8**

(22) Anmeldetag: **23.11.83**

(51) Int. Cl.³: **G 02 B 7/26**

(30) Priorität: **30.12.82 DE 3248608**

(43) Veröffentlichungstag der Anmeldung:
**11.07.84 Patentblatt 84/28**

(84) Benannte Vertragsstaaten:
**AT BE CH DE FR GB IT LI LU NL**

(71) Anmelder: **ANT Nachrichtentechnik GmbH**
**Gerberstrasse 33**
**D-7150 Backnang(DE)**

(72) Erfinder: **Polzer, Rudolf, Dipl.-Ing.**
**Plattenwaldallee 123**
**D-7150 Backnang(DE)**

(74) Vertreter: **Wiechmann, Manfred, Dipl.-Ing.**
**ANT Nachrichtentechnik GmbH Gerberstrasse 33**
**D-7150 Backnang(DE)**

(54) **Steckverbindung.**

(57) Die Anmeldung betrifft eine Steckverbindung für mindestens eine der Datenübertragung dienende Lichtleitfaser (10), wobei diese Verbindung mit einer weiteren Betriebsspannungen führenden Steckverbindung (2) kombiniert ist. Dabei ist die Lichtleitfaser-Steckverbindung in eine Schuko-Steckverbindung derart integriert, daß die Lichtleitfaser (10) zentral in ihr angeordnet ist und die mechanische Führung im wesentlichen durch die Schuko-Steckverbindung (2) erfolgt.

EP 0 113 024 A1

- 1 -

K1 E7/Sch/ht
BK 82/165

Steckverbindung

Die Erfindung betrifft eine Steckverbindung für mindestens eine der Datenübertragung dienende Lichtleitfaser. Diese Verbindung ist mit einer weiteren Steckverbindung kombiniert, die ihrerseits der Zuführung erforderlicher Betriebsspannungen dient. Die beiden Steckverbindungen sind derart miteinander integriert, daß die Lichtleitfaser mit der zugehörigen Steckverbindung zentral in einer Schuko-Steckverbindung angeordnet ist. Durch die DE-PS 29 22 937 ist eine Kabelkopplung bekannt, bei welcher sowohl Heiz- als auch Steuerstromleitungen mit einer Lichtleitfaser zur Datenübertragung in einer gemeinsamen Steckverbindung kombiniert sind.

Ferner ist durch die DE-PS 30 41 642 eine Steckverbindung bekannt zur gleichzeitigen Verbindung von zwei Koaxialkabeln und zwei Lichtleitfasern, bei welcher die Stützscheiben der Koax-Verbindung als Träger der Vorratslänge der Lichtleitfaser dienen.

Vorliegende Erfindung hat sich die Aufgabe gestellt, eine einfach herzustellende Steckverbindung aufzuzeigen, die besonders geeignet ist zum Einsatz bei zukünftigen Hausanschlüssen für Sende- oder Empfangsgeräte oder auch Meßgeräte, welche über eine Verkabelung mittels Lichtleitfasern an zentralen Quellen oder Senken anschließbar sind.

Ausgehend von einer Steckverbindung für mindestens eine der Datenübertragung dienende Lichtleitfaser, wobei diese Verbindung mit einer weitere Betriebsspannungen führende Steckverbindung kombiniert ist, wird hierfür erfindungsgemäß vorgeschlagen, daß die Lichtleitfaser-Steckverbindung in eine Schuko-Steckverbindung derart integriert ist, daß die Lichtleitfaser zentral in ihr angeordnet ist und die mechanische Führung im wesentlichen durch die Schuko-Steckverbindung erfolgt.

Zweckmäßige Weiterbildungen der Erfindung können gemäß den Merkmalen der Unteransprüche realisiert werden.

Anhand eines Ausführungsbeispieles soll im folgenden die Erfindung kurz erläutert werden.

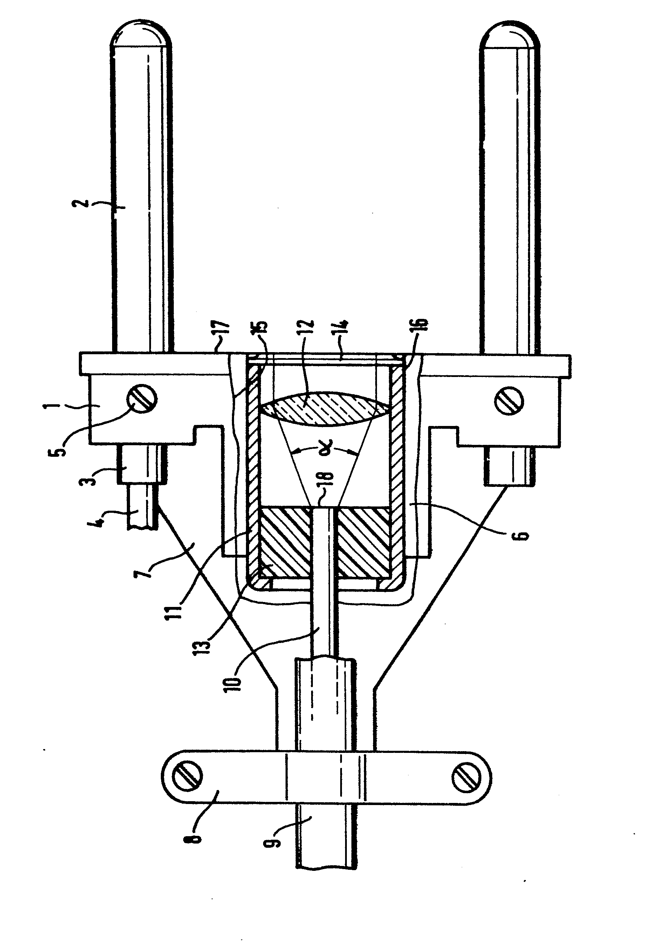

In der Figur ist eine erfindungsgemäße Steckverbindung dargestellt. Ein genormter Schukostecker 1 ist längs der Schnittlinie 15 so geschnitten dargestellt, daß die zentral im Schukostecker angeordnete Lichtleitfaser-Steckverbindung 16 sichtbar wird. Der Schukostecker selbst ist in üblicher Weise aufgebaut. Er besteht aus den beiden Spannung führenden Kontaktstiften 2, die in dem Kunststoff-Tragkörper 1 befestigt sind. Dieser Kunststoffkörper ist auf der seiner Frontseite 17 abgewandten Seite unter anderem so profiliert, daß Aufnahmehüllen 3 vorhanden sind, in welche ein Anschlußkabel 4 einsteckbar und mittels der Befestigungsschrauben 5 festklemmbar ist, um die metallische Verbindung
mit dem Kontaktstift 2 herzustellen. Der aus Kunststoff bestehende Tragkörper des Schukosteckers 1 ist außerdem mit
einem metallischen Teil 7 fest verbunden, welcher an seinem
der Stirnseite 17 abgewandten Ende die Befestigungsschelle 8
zum Festklemmen des zuzuführenden Kabels 9 aufweist.

Der Schukostecker ist nun in seinem zentralen Teil mit einer zylindrischen Aussparung versehen, in welche die Lichtleitfaser-Steckverbindung 16 von vorne einführbar ist.
Um eine ausreichende Führung der Lichtleitfaser-Steckverbindung zu gewährleisten, ist der Kunststoffteil des Schuko-
Steckers 1 hierfür mit einer ebenfalls zylindrischen, zentral
verlaufenden Verstärkung 6 versehen, in die Teil 16 zentrierend eingeschoben werden kann. Als Lichtleitfaser-
Steckverbindung kann eine Verbindung verwendet werden, welche die Lichtleitfaser mit der korrespondierenden Lichtleitfaser der zugehörigen Steckverbindung dadurch verbindet, daß
die beiden Fasern stumpf aneinanderstoßen.Beim dargestellten
Ausführungsbeispiel wurde eine sogenannte Linsensteckverbindung gewählt. Sie besteht aus einem Gehäuse 11, welches in die
zentrale Aussparung des Schukosteckers zentrierend eingeführt ist. Die Vorderseite des Gehäuses 11 ist mit einer in
der Frontseite 17 des Schukosteckers fluchtenden Abdeckung 14
versehen, welche lichtdurchlässig ausgebildet ist. Die Lichtleitfaser 10, die vom linken Ende her in das Gehäuse 11 eingeführt ist, endet bereits etwa im ersten Drittel der Länge
des Gehäuses 11. Sie ist mit diesem Gehäuse durch eine Vergußmasse 13 in dieser Lage befestigt. Zwischen der Stirnseite 18 der Lichtleitfaser 10 und der oben erwähnten Abdeckplatte 14 ist eine dielektrische Linse 12 eingefügt. Diese
dient dazu, daß von der Stirnseite 18 der abgemantelten
Lichtleitfaser 10 ausgehende Licht zu sammeln und möglichst
parallel nach rechts weiterzuleiten. Die gestrichelt eingezeichneten Linien sollen dabei die Begrenzung des Lichtstromes darstellen. Mit $\alpha$ ist der Öffnungswinkel des von der Faser abgestrahlten Lichtkegels bezeichnet. Diese Anordnung einer Lichtleitfaser-Steckverbindung hat den Vorteil, .daß die Verbindung an sich größere Durchmesser aufweisen kann (der Lichtstrahl wird aufgeweitet), und daß in der Verbindungsebene kein direkter Kontakt der Lichtleitfasern erforderlich ist, da die Verbindung über den aufgeweiteten Lichtstrom erfolgt.

Die Schucko-Steckverbindung kann sowohl als Vaterstecker als auch als Mutterstecker ausgebildet werden.

Es empfiehlt sich, die Lichtleitfaser-Steckverbindung innerhalb des Schukosteckers leicht schwimmend auszuführen, sodaß die Zentrierung mit der korrespondierenden Lichtleitfaser-Steckverbindung im wesentlichen über die Kontaktstifte 2 des Schukosteckers erfolgt. Damit bei öfterem Gebrauch die Lichtleitfaser-Steckverbindung nicht beschädigt wird, ist es ferner zweckmäßig, die Lichtleitfaser-Steckverbindung 16 mit ihrer stirnseitigen Frontplatte 14 bereits etwas vor der Stirnseite 17 der Schuko-Steckverbindung enden zu lassen.

Die erfindungsgemäße Ausbildung der Steckverbindung bringt den Vorteil, daß man für die Zuführung der erforderlichen Betriebsspannungen, der vorhandenen Sender oder Empfänger sowie für die Herstellung der über Lichtleitfaser erfolgenden Verbindung nur eine einzige Steckverbindung benötigt. Das Lichtleitfaserkabel, über welches die Daten in die einzelnen Haushalte eingespeist werden, kann ferner gleichzeitig mit den Stromversorgungsleitungen für die Geräte verlegt werden oder - bei Verlegung im Rohr unter Putz - nachträglich leicht eingezogen werden. Man hat damit sowohl die Betriebsspannung führenden Leitungen als auch die Daten führenden Leitungen an der gleichen Stelle zur Verfügung und kann sie mittels der gleichen Steckverbindung dem entsprechenden Gerät zuführen.

- 1 -

ANT Nachrichtentechnik GmbH

Gerberstrasse 33

D-7150 Backnang

K1 E7/Sch/sch
BK 82/165

Patentansprüche

1. Steckverbindung für mindestens eine der Datenübertragung dienende Lichtleitfaser, wobei diese Verbindung mit einer weiteren Betriebsspannungen führende Steckverbindung kombiniert ist, dadurch gekennzeichnet, daß die Lichtleitfaser-Steckverbindung in eine Schuko-Steckverbindung derart integriert ist, daß die Lichtleitfaser zentral in ihr angeordnet ist und die mechanische Führung im wesentlichen durch die Schuko-Steckverbindung erfolgt.

2. Verbindung nach Anspruch 1, dadurch gekennzeichnet, daß die Lichtleitfaser-Verbindung schwimmend bzw. selbstzentrierend in der Schuko-Steckverbindung gelagert ist.

3. Verbindung nach einem der vorhergehenden Ansprüche, dadurch gekennzeichnet, daß die Lichtleitfaser-Verbindung in Form einer Linsen-Steckverbindung mit am Faserende angebrachter Linse ausgeführt ist.

4. Verbindung nach Anspruch 1 oder 2, dadurch gekennzeichnet, daß die Lichtleitfaser-Verbindung eine stumpf-endende Faser aufweist.

5. Verbindung nach einem der vorhergehenden Ansprüche, dadurch gekennzeichnet, daß sie als Vaterstecker ausgebildet ist.

6. Verbindung nach einem der Ansprüche 1 bis 5, dadurch gekennzeichnet, daß sie als Mutterstecker ausgebildet ist.

7. Verbindung nach einem der vorhergehenden Ansprüche, dadurch
gekennzeichnet, das die Lichtleitfaser bereits etwas vor der
Stirnseite der Schuko-Steckverbindung endet.

0113024

BK 82 / 165

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 508 488 (BACH & CO.) <br> * Anspruch 1 * | 1 | G 02 B 7/26 |
| A | | 4 | |
| | --- | | |
| Y | DE-A-2 849 543 (MESSERSCHMITT-BÖLKOW-BLOHM GMBH) <br> * Anspruch 1 * | 1 | |
| | --- | | |
| A | DE-B-2 800 093 (GENERAL MOTORS CORP.) <br> * Anspruch 1 * | 1 | |
| | --- | | |
| D,A | DE-B-2 922 937 (FABEG GMBH) <br> * Anspruch 1; Figur 1; Spalte 4, Zeilen 34-48; Spalte 5, Zeilen 41-62 * | 1-3 | RECHERCHIERTE SACHGEBIETE (Int. Cl. ³) <br><br> G 02 B 7/26 |
| | --- | | |
| A | DE-B-2 528 270 (FELTEN UND GUILLEAUME CARLSWERK AG) <br> * Anspruch 7 * | 2 | |
| | --- | | |
| D,A | DE-C-3 041 642 (LICENTIA) <br> * Figur 1 * | 3 | |
| | --- | | |
| A | DE-A-2 064 533 (MINING & CHEMICAL PRODUCTS LTD.) <br> * Figur 1, Seite 2, Absatz 3 * | 3 | |
| | ----- | | |

Der vorliegende Recherchenbericht wurde für alle Patentansprüche erstellt.

| Recherchenort <br> BERLIN | Abschlußdatum der Recherche <br> 15-02-1984 | Prüfer <br> FUCHS R |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82